Europäisches Patentamt

European Patent Office

Office européen des brevets

(19)

(11) Veröffentlichungsnummer : **0 060 547**
**B1**

(12) **EUROPÄISCHE PATENTSCHRIFT**

(45) Veröffentlichungstag der Patentschrift :
18.09.85

(51) Int. Cl.⁴ : **F 24 D   3/14**

(21) Anmeldenummer : **82102092.2**

(22) Anmeldetag : **15.03.82**

(54) **Fussbodenheizung.**

(30) Priorität : **13.03.81 DE 3109817**

(43) Veröffentlichungstag der Anmeldung :
**22.09.82 Patentblatt 82/38**

(45) Bekanntmachung des Hinweises auf die Patenterteilung : **18.09.85 Patentblatt 85/38**

(84) Benannte Vertragsstaaten :
**AT BE CH DE FR GB IT LI LU NL SE**

(56) Entgegenhaltungen :
**DE-A- 2 840 149**
**DE-A- 2 911 982**
**FR-A- 2 390 684**

(73) Patentinhaber : **THYSSEN PLASTIK ANGER KG**
**Anzinger Strasse 1**
**D-8000 München 80 (DE)**

(72) Erfinder : **Bauer, Peter**
**Kleinmenhaupten, 71 1/8**
**D-8481 Konzell (DE)**

## Beschreibung

Die Erfindung bezieht sich auf eine Fußbodenheizung aus vorgefertigten Bauelementen, wie Systemplatten aus tiefgezogenen Kunststoffplatten, die auf der gesamten oberen Fläche in einem bestimmten Raster angeordnete, mit Hinterschneidungen versehene Erhebungen aufweisen, zwischen denen die dem Wärmeaustausch dienenden Rohre angeordnet sind, die vorgefertigten plattenförmigen Bauelemente auf ein Dämmaterial aufgebracht sind und nach der Verlegung in den Estrich des Fußbodens eingebettet sind.

Aus vorgefertigten Bauelementen zusammengesetzte Fußboden-Temperiersysteme sind an sich bekannt. So zeigt beispielsweise die DE-A 1929529 ein solches Fußboden-Temperierungssystem, bei dem die der Heizung, bzw. Kühlung des Fußbodens dienenden Rohre zwischen einer Deckplatte aus wärmeleitendem Baustoff und der mit nach oben vorstehenden Nocken ausgebildeten Grundplatte noch zusätzlich eine wärmeleitende Zwischenschicht vorgesehen ist. Auch Bauplatten für die Aufnahme von einem Temperiermedium führenden Rohr aus Kunststoff bzw. Kunststoff-Hartschaum sind bekannt geworden, wie beispielsweise aus dem DE-U-1986165.

Es is weiterhin bekannt, die vorzugsweise aus Kunststoff bestehenden Bauplatten auf ein Dämmaterial aufzukaschieren und die aus Metall oder Kunststoff bestehenden Rohre für das Temperiermedium mittels Rasten, beispielsweise Clipsen, auf diesen Platten zu befestigen, bzw. in besonderen Halterungen zu führen.

Die einzelnen Bauplatten stoßen dabei entweder lose aneinander oder werden mittels Verbindungsankern, wie in der DE-B 1784235 beschrieben, miteinander verbunden.

Die DE-A-2840149 beschreibt eine Verbundplatte für Fußbodenheizungen, bei der die Rohrführungen als Halte- und Umlenknocken ausgebildet sind und die von den Haltenocken gebildete Rille zur Aufnahme eines Heizrohres eine Hinterschneidung aufweist.

Schließlich zeigt die DE-A-2911982 eine wärmeisolierende Platte zur seitlichen Fixierung von biegsamen Heizrohren mit Fixierhöckern und sogenannten Unterstützungserhebungen, die niedriger als die Fixierhöcker sind und als Auflage für die Heizrohre dienen, damit das Heizrohr von einer Estrichmasse umhüllt werden kann. Diese leistenartigen Erhebungen sind flach ausgebildet, ihre Breite ist wesentlich größer als ihre Höhe. Dazu gehören Niederhalter, die auf benachbarte Höcker aufgesteckt werden, um die Heizrohre zu fixieren. Dabei krallt sich eine widerhakenförmige Kante in das Material der Systemplatte ein.

Die vorgeschlagenen Fußbodenheizungssysteme weisen gewisse Nachteile auf, nämlich dann, wenn das gesamte Platten-Rohrleitungssystem in den Estrich des Fußbodens eingegossen wird, was derzeit eine weit verbreitete Technologie ist.

Dabei erfolgt ein flächiger Einschluß des Rohres, der die notwendige durchgehende Einbettung des Rohres in den Estrich verhindert. Somit entsteht an jeder Halterung im oberen Bereich eine einseitige Estrichanlagerung, während seitlich ein Übergang vom elastischen, nachgiebigen Kunststoff zum später starren Estrich vorhanden ist. Dabei entstehen Spannungszonen im Temperiermedium führenden Kunststoffrohr, die sich schädlich auf das Rohr selbst und dessen Einbettung in den Estrich auswirken. Ein weiterer Nachteil ist durch das Verlegen der Platten insofern gegeben, als diese Platten entweder lose aneinander stoßen und dabei durch das Verlegen der Rohre verschoben werden können, was auch wieder Spannungszonen innerhalb der Rohre, bzw. des gesamten Systems hervorrufen kann, oder aber zusätzliche Aufwendungen beim Verlegen gemacht werden müssen, wenn diese Platten beispielsweise mit Verbindungsankern miteinander verbunden werden sollen.

Auch die Einführung von Fixierhöckern, Unterstützungserhebungen, Halte- und Umlenknocken oder dergl. konnten das Problem des flächigen Anliegens der Heizungsrohre auf den Verbundplatten, etc. nicht lösen. Auch sind die vorgeschlagenen Verbundplatten oder dergl. keineswegs kraftschlüssig miteinander verbunden. Ein weiterer Nachteil der bisher bekanntgewordenen Fußbodenheizungssysteme ist darin zu sehen, daß der Abstand zwischen Nocken, Fixierhöckern usw. derart groß bemessen ist, daß beim Verlegen ohne weiteres auf die Heizungsrohre getreten werden kann, was eine Beschädigung derselben nach sich zieht.

Der Erfindung liegt daher die Aufgabe zugrunde, einerseits die Nachteile der bekannten Fußboden-Heizungssysteme dieser Art mit Sicherheit zu vermeiden und eine Bauplatte für Fußbodenheizungen zu besitzen, die eine sichere vollständige Einbettung der das Temperiermedium führenden Rohre in den Estrich ohne zusätzliche Hilfsmittel ermöglicht und außerdem eine einfache feste Verbindung der einzelnen Platten untereinander gewährleistet, sowie eine Begehbarkeit des Systems auch während der Verlegung zuläßt.

Erfindungsgemäß wird dies dadurch erreicht, daß das Oberteil der Systemplatte aus einer Kunststoffplatte mit Erhebungen, die durch Stege miteinander verbunden sind, besteht, diese miteinander ein netzförmiges Stegraster mit Knotenpunkten bilden, die Hinterschneidungen der Erhebungen und die Stege als punkt-, bzw. linienförmige Halterung, bzw. Auflage für die Rohre dienen und an den Berührungsflächen der einzelnen Platten jeweils die Erhebungen der Platten an zwei Seitenkanten nur halbseitig ausgebildet und über die Erhebungen der ersten Platten in deren Hinterschneidungen einrastend gestülpt sind, während sich die Ränder der aneinandergrenzenden Platten in bekannter Weise überlappen und somit einen kraftschlüssig in sich geschlossenen Plattenverband bilden.

Vorteilhafterweise ist das Oberteil der Platte aus Kunststoff im Tiefziehverfahren hergestellt.

Vorteilhafterweise sind die Erhebungen der Platte etwa zylinderförmig ausgebildet. Eine Ausführungsvariante sieht einen etwa quadratischen Grundriß vor, während eine weitere Ausführungsvariante mehrere Vorsprünge für die Aufnahme des das Temperiermedium führenden Rohres besitzt.

Die mit der Erfindung vorgeschlagene Fußbodenheizung weist den Vorteil auf, daß die Temperiermedium führenden Rohre nur minimale Berührungslinien, bzw. Punkte mit den Erhebungen und Versteifungen, d. h. Stegen aufweisen und somit voll in den Estrich eingebettet werden können. Die Verbindung der einzelnen Platten untereinander ist ohne Werkzeug möglich und durch die rasterartige Ausbildung der Erhebungen und die daraus resultierende Vielzahl von sich überlappenden Erhebungen absolut formschlüssig. Der Abstand der Rohre untereinander ist stets gleich, Spannungszonen im Rohr können nicht auftreten. Trotzdem ist jede Verlegeart, sowohl geradlinig als auch schlangenförmig, schneckenförmig, mäanderförmig etc. möglich. Selbst bei einer geringen Wanddicke der Platten ist durch die Anordnung der Versteifungsstege und Erhebungen dieselbe trittfest und auch während der Montage begehbar, ohne daß Schäden auftreten können. Ein weiterer Vorteil ist darin zu sehen, daß der Feuchtigkeitsschutz der Wärme- bzw. Trittschalldämmung genüber dem aufzubringenden Estrich gewährleistet ist.

Die Erfindung ist nachstehend anhand eines in den Abbildungen dargestellten Ausführungsbeispiels näher erläutert.

Es zeigt:

Figur 1   Eine Draufsicht auf die Fußbodenheizung

Figur 2   Einen Schnitt in Richtung YY der Figur 1

Figur 3   Eine Ausführungsvariante

Figur 4   Eine Draufsicht auf die Figur 2

Figur 5   Eine Draufsicht auf die Figur 3

Figur 6   Einen Schnitt in Richtung XX der Figur 1

Figur 7   Die Draufsicht auf die Figur 6 als Ausführungsvariante.

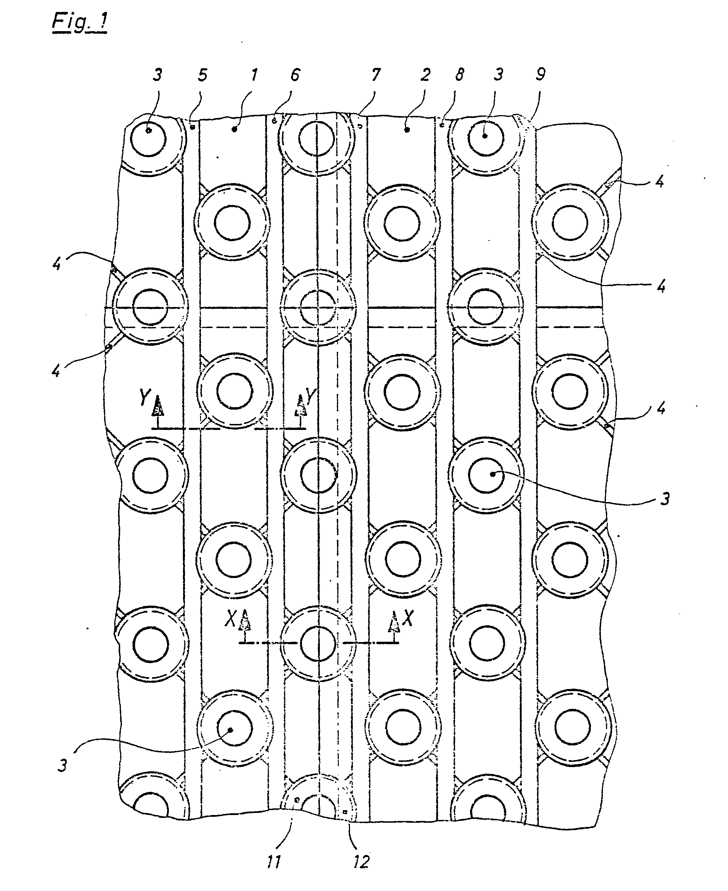

Die in Figur 1 dargestellte Fußboden-Heizung besteht im wesentlichen aus mehreren, beispielsweise aus Kunststoff tiefgezogenen, Platten 1 und 2 mit rondenartigen Erhebungen 3, die untereinander durch Stege 4 verbunden sind. Mehrere ein Temperiermedium führende Rohre 5, 6, 7, 8, 9 sind über die Platten 1, 2 etc. derart verlegt, daß sie die Erhebungen 3 nur linienförmig und die Stege 4 nur punktförmig berühren. Die Erhebungen der Randzonen der Platten 1,2 etc. 11 bzw. 12, dienen gleichzeitig der festen Verbindung der einzelnen Platten untereinander, indem die Erhebungen 12 nur halbseitig ausgebildet sind und beim Verbinden über die Randerhebungen 11 der Platten 1 gestülpt werden, wobei sich diese fest miteinander verrasten und die Ränder der Platten 2 und 1 überlappen. Die Erhebungen 11 können selbstverständlich auch nur zu Teilen ausgebildet sein, anstatt vollständig. Es ergibt sich dabei sogar eine größere Elastizität beim Überstülpen der randseitigen Erhebung 12.

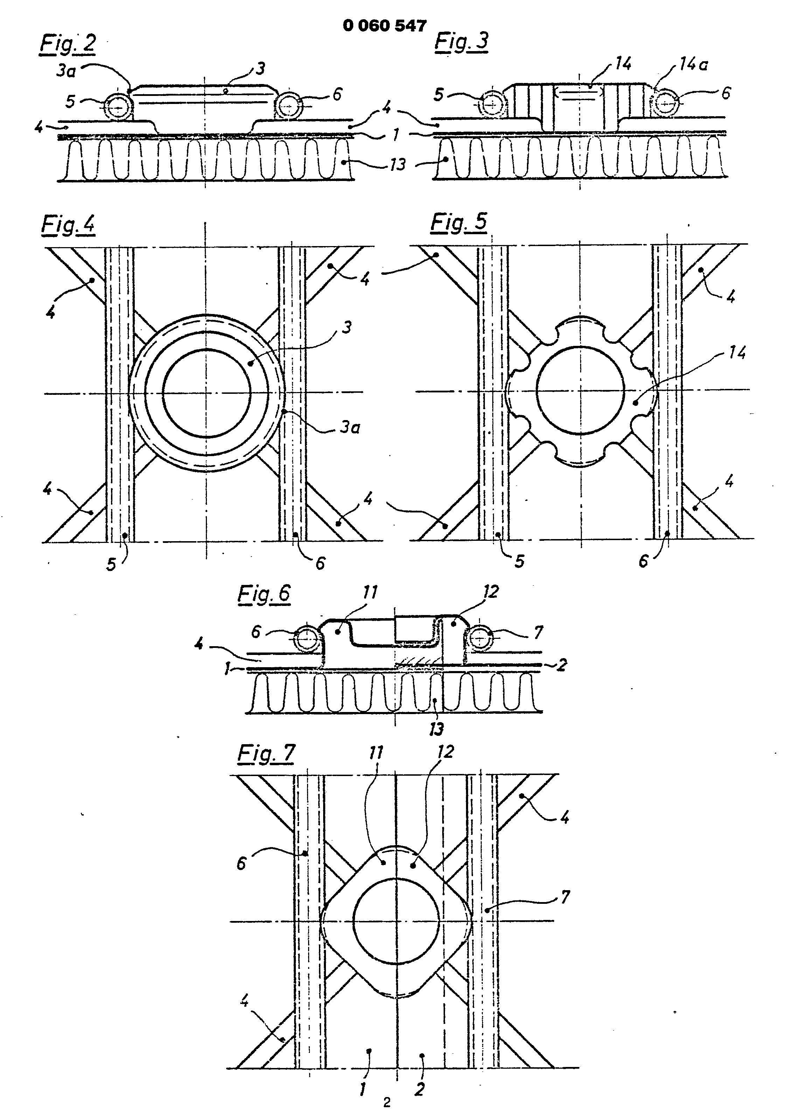

Die Figur 2 zeigt einen Schnitt in Richtung YY der Figur 1, wobei der Aufbau des Fußboden-Heizungssystems deutlicher wird. Die Systemplatte besteht aus einer Oberseite 1 mit den Erhebungen 3, die etwa zylinderförmig ausgebildet sind und eine Hinterschneidung 3 a besitzen, damit das Rohr 5 bzw. 6 einwandfrei verlegt und gehalten werden kann. Die Berührung zwischen der Erhebung 3 und dem Rohr 5 bzw. 6 ist nur linienförmig, während sie gegenüber den Stegen 4 praktisch punktförmig ist. Die Oberseite der Systemplatte 1 ist auf eine Tritt- und Wärmedämplatte 13 aufgebracht, beispielsweise verklebt oder auf eine sonstige geeignete Weise verbunden. Die Abbildung 4 zeigt eine Draufsicht auf die Figur 2, aus der der Aufbau deutlicher als in Figur 1 ersichtlich ist.

Die Figur 3 und 5 zeigt eine Ausführungsvariante der Erhebungen 3, die mit 14 und deren Hinterschneidungen mit 14 a bezeichnet sind.

Die Figur 6 zeigt die Verbindungsstelle zwischen den Platten 1 und 2. Aus der Abbildung ist ersichtlich, daß die randseitige Erhebung 12 nur halbseitig ausgebildet ist und über die randseitige Erhebung 11 der Platte 1, die am Plattenrand ebenfalls abgeschnitten ist, gestülpt ist. Die Ränder der beiden Platten 1 und 2 überlappen sich soweit, daß ein Feuchtigkeitsschutz der Wärmedämmung gegenüber dem später aufzubringenden Estrich gewährleistet ist.

Die Figur 7 zeigt eine weitere Ausführungsvariante der Erhebung, die etwa quadratisch mit abgerundeten Ecken ausgebildet ist, wobei ebenfalls die abgerundeten Ecken als Hinterschneidung für die Aufnahme des Rohres 6 bzw. 7 dienen.

**Patentansprüche**

1. Fußbodenheizung aus vorgefertigten Bauelementen, wie Systemplatten aus tiefgezogenen Kunststoffplatten, die auf der gesamten oberen Fläche in einem bestimmten Raster angeordnete, mit Hinterschneidungen (2a) versehene Erhebungen (3) aufweisen, zwischen denen die dem Wärmeaustausch dienenden Rohre (5, 6) angeordnet sind, die vorgefertigten plattenförmigen Bauelemente auf ein Dämmaterial (13) aufgebracht sind und nach der Verlegung in den Estrich des Fußbodens eingebettet sind, dadurch gekennzeichnet, daß das Oberteil der Systemplatte aus einer Kunststoffplatte (1, 2) mit Erhebungen (3), die durch Stege (4) miteinander verbunden sind, besteht, diese miteinander ein netzförmiges Stegraster mit Knotenpunkten bilden, die Hinterschneidungen (3a) der Erhebungen (3) und die Stege (4) als punkt: bzw.

linienförmige Halterung, bzw. Auflage für die Rohre (5, 6) dienen und an den Berührungsflächen der einzelnen Platten (1, 2) jeweils die Erhebungen (12) der Platten (2) an zwei Seitenkanten nur halbseitig ausgebildet und über die Erhebungen (11) der ersten Platten (1) in deren Hinterschneidungen (3a) einrastend gestülpt sind, während sich die Ränder der aneinandergrenzenden Platten (1, 2) in bekannter Weise überlappen und somit einen kraftschlüssig in sich geschlossenen Plattenverband bilden.

2. Fußbodenheizung nach Anspruch 1 u. 2, dadurch gekennzeichnet, daß die Erhebungen (3) der Platte etwa zylinderförmig ausgebildet sind.

3. Fußbodenheizung nach Anspruch 1 und 2, dadurch gekennzeichnet, daß die Erhebungen der Platte (1, 2) etwa würfelförmig ausgebildet sind.

## Claims

1. A floor heating system comprising prefabricated elements, such as system plates consisting of deep-drawn plastic plates, which are formed throughout their top surface with elevations (3) having undercuts (2a) and arranged in a predetermined grid pattern, and heat exchange pipes (5, 6) extending between said elevations, wherein the prefabricated platelike elements have been applied to heat insulating material (13) and are embedded in the floor topping when said elements have been placed, characterized in that the top portion of the system plate consists of a plastic plate (1, 2) provided with elevations (3), which are interconnected by ribs (4), which constitute a grid having nodes, wherein the undercuts (3a) of the elevations (3) and the ribs (4) serve to retain and support the pipes (5, 6), respectively, by point or line contact therewith, the elevations (12) of the plates (2) are only half-sided at two side edges at the contacting surfaces of the plates (1, 2) and are fitted over the elevations (11) of the first plates (1) to snap into their undercuts (3a) whereas the edges of the adjoining plates (1, 2) overlap in known manner to form a self-containing system of plates which are interconnected by force-transmitting joints.

2. A floor heating system according to claim 1, characterized in that the elevations (3) of the plate are approximately cylindrical.

3. A floor heating system according to claims 1 and 2, characterized in that the elevations of the plate (1, 2) are approximately cubic.

## Revendications

1. Chauffage de sol en éléments préfabriqués tels que dalles modulaires en dalles plastiques embouties comportant sur toute la surface supérieure des élévations (3) disposées dans un réseau déterminé et pourvues de contre-dépouilles (2a), élévations entre lesquelles sont disposés les tuyaux (5, 6) servant à l'échange de chaleur, les éléments préfabriqués en forme de dalle étant montés sur un matériau isolant (13) et noyés dans la chape du sol après la pose, caractérisé en ce que la partie supérieure de la dalle modulaire consiste en une dalle plastique (1, 2) avec des élévations (3) qui sont reliées entre elles par des traverses (4), en ce que ces dernières forment un réseau de traverses avec points d'intersection, en ce que les contre-dépouilles (3a) des élévations (3) et les traverses (4) servent de fixations ponctuelles ou linéraires ou d'appui pour les tuyaux (5, 6) et en ce qu'aux surfaces des contacts des différentes dalles (1, 2) les élévations (12) des dalles (2) ne sont formées qu'à moitié le long de deux bords latéraux et viennent coiffer les élévations (11) des dalles (1) en s'encliquetant dans les contre-dépouilles (3a) alors que les bords des dalles avoisinantes (1, 2) se chevauchent dans la manière connue et forment ainsi un assemblage de dalles fermé et cohérent.

2. Chauffage de sol selon la revendication 1 caractérisé en ce que les élévations (3) de la dalle ont une forme à peu près cylindrique.

3. Chauffage de sol selon la revendication 1 ou 2 caractérisé en ce que les élévations de la dalle (1, 2) ont une forme approximativement cubique.

Fig. 1

_Fig. 2_

3a
3
5
6
4
4
1
13

_Fig. 3_

14
14a
5
6
4
1
13

_Fig. 4_

4
4
3
4
4
3a
5
6

_Fig. 5_

4
4
14
4
4
5
6

_Fig. 6_

11
12
6
7
4
1
2
13

_Fig. 7_

11
12
4
6
7
4
1
2
1
2